# EUROPÄISCHE PATENTSCHRIFT

(11) **EP 2 981 428 B1**
(45) Veröffentlichungstag und Bekanntmachung des Hinweises auf die Patenterteilung: **21.08.2019**
(21) Anmeldenummer: 14716537.7
(22) Anmeldetag: 01.04.2014
(51) Int. Cl.: B60K 35/00, G06F 3/0362, G06F 3/0354

(54) **BEDIENVORRICHTUNG FÜR EIN KRAFTFAHRZEUG UND LENKRAD MIT EINER BEDIENVORRICHTUNG**
CONTROL DEVICE FOR A MOTOR VEHICLE AND STEERING WHEEL COMPRISING A CONTROL DEVICE
DISPOSITIF DE COMMANDE POUR UN VÉHICULE AUTOMOBILE ET VOLANT DE DIRECTION COMPORTANT UN DISPOSITIF DE COMMANDE

(30) Priorität: 05.04.2013 DE 102013005886
(43) Veröffentlichungstag der Anmeldung: 10.02.2016
(73) Patentinhaber: Valeo Schalter und Sensoren GmbH, 74321 Bietigheim-Bissingen (DE)
(72) Erfinder: INTINI, Onofrio, 71665 Vaihingen/Enz (DE)
(74) Vertreter: Pothmann, Karsten
(86) Internationale Anmeldenummer: PCT/EP2014/056506
(87) Internationale Veröffentlichungsnummer: WO 2014/161841

(56) Entgegenhaltungen:
- EP-A1- 1 555 684
- EP-A1- 2 306 273
- CN-U- 202 856 713
- DE-A1- 19 840 070
- DE-A1-102007 006 506
- DE-A1-102010 012 240
- GB-A- 2 494 420
- US-A1- 2002 030 668
- US-A1- 2005 098 417
- US-A1- 2007 136 694
- US-A1- 2009 189 790
- US-A1- 2016 059 699
- US-B2- 7 719 142
- US-B2- 7 790 996
- US-B2- 7 812 274

## Beschreibung

Die Erfindung betrifft eine Bedienvorrichtung für ein Kraftfahrzeug, mit zumindest einem durch eine Bedienperson betätigbaren Bedienelement, und mit einem von dem Bedienelement separaten Symbolträger zur grafischen Kennzeichnung des zumindest einen Bedienelements. Die Erfindung betrifft außerdem ein Fahrzeuglenkrad, insbesondere für einen Personenkraftwagen, mit einer solchen Bedienvorrichtung.

Das Interesse richtet sich vorliegend vorzugsweise auf eine Bedienvorrichtung, welche speziell zur Installation an einem Lenkrad eines Kraftfahrzeugs konzipiert ist. Solche Bedienvorrichtungen sind aus dem Stand der Technik bereits in vielfältiger Ausgestaltung bekannt. In diesem Zusammenhang ist es beispielsweise bereits bekannt, mechanische Druckschalter oder Drehschalter an einem Lenkrad anzubringen, mittels denen beispielsweise der Bordcomputer des Kraftfahrzeugs, eine Telefonanlage, eine Audioanlage sowie weitere Funktionsgeräte des Kraftfahrzeugs bedient werden können. Im Stand der Technik muss jedoch ein gewisser Kompromiss zwischen der Übersichtlichkeit der Bedienelemente einerseits und der Anzahl der zu bedienenden Funktionsgeräte des Kraftfahrzeugs andererseits getroffen werden. Bei einer Vielzahl von Bedienelementen verliert der Fahrer recht schnell den Überblick und lässt sich somit relativ einfach von der aktuellen Straßensituation ablenken. Bei manchen Bedienvorrichtungen, die relativ komplex aufgebaut sind, muss der Fahrer für die Betätigung der verschiedenen Bedienelemente sogar seine Hände von dem Lenkrad nehmen. Würde andererseits die Anzahl der Bedienelemente im Stand der Technik reduziert werden, so wäre die Anzahl der Funktionsgeräte reduziert, die mittels der am Lenkrad angebrachten Bedienelemente gesteuert werden können. In diesem Falle müsste der Fahrer gegebenenfalls Bedienelemente betätigen, die an einer Mittelkonsole angebracht sind. Auch dies führt zu einer Ablenkung des Fahrers. Eine besondere Herausforderung besteht somit darin, zu gewährleisten, dass der Fahrer mittels der Bedienvorrichtung eine Vielzahl von verschiedenen Funktionen bedienen kann, die Bedienvorrichtung selbst jedoch sehr übersichtlich und benutzerfreundlich konzipiert ist, so dass sie zu keiner Ablenkung von der aktuellen Straßensituation führt.

Es ist Aufgabe der Erfindung, eine Lösung aufzuzeigen, wie bei einer Bedienvorrichtung der eingangs genannten Gattung ermöglicht werden kann, dass mittels des zumindest einen Bedienelements möglichst viele verschiedene Funktionen ausgeführt werden können, ohne dass die Bedienvorrichtung selbst unübersichtlich gestaltet wird.

Diese Aufgabe wird erfindungsgemäße durch eine Bedienvorrichtung sowie durch ein Lenkrad mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Bedienvorrichtung ist speziell zur Installation in einem Kraftfahrzeug, an einem Lenkrad, ausgebildet und umfasst zumindest ein Bedienelement sowie einen von dem Bedienelement separaten Symbolträger zur grafischen Kennzeichnung des zumindest einen Bedienelements. Der Symbolträger weist für das Bedienelement ein erstes sowie zumindest ein davon verschiedenes weiteres grafisches Symbol auf und kann zwischen einer ersten Stellung und zumindest einer weiteren Stellung relativ zu dem Bedienelement und somit unabhängig von dem Bedienelement und insbesondere unabhängig von einer Betätigung des Bedienelements bewegt werden. Während in der ersten Stellung das Bedienelement mit dem ersten Symbol gekennzeichnet ist, ist das Bedienelement in der weiteren Stellung des Symbolträgers mit dem weiteren Symbol gekennzeichnet.

Erfindungsgemäß wird somit vorgeschlagen, bei einer Bedienvorrichtung mit zumindest einem Bedienelement eine veränderbare Kennzeichnung dieses Bedienelements vorzusehen. In Abhängigkeit von der Stellung des Symbolträgers können dadurch dem Bedienelement unterschiedliche Bedienfunktionen zugewiesen werden. Auf diese Art und Weise kann eine Bedienvorrichtung geschaffen werden, mittels welcher einerseits eine Vielzahl von verschiedenen Bedienfunktionen und somit auch eine Vielzahl von unterschiedlichen Funktionsgeräten des Kraftfahrzeugs bedient werden können, die andererseits jedoch sehr übersichtlich und benutzerfreundlich konzipiert ist und eine besonders intuitive Bedienung ermöglicht. Hierdurch wird wiederum erreicht, dass der Fahrer beim Bedienen der Bedienvorrichtung nicht von der aktuellen Straßensituation abgelenkt wird und sich weiterhin auf die augenblickliche Verkehrssituation konzentrieren kann. Die Anzahl der Bedienelemente kann auf diesem Wege auf ein Minimum reduziert werden, ohne dass ein Kompromiss bezüglich der Anzahl der zu steuernden Funktionsgeräte des Kraftfahrzeugs getroffen zu werden braucht.

Also weist der Symbolträger für das Bedienelement ein erstes und zumindest ein weiteres grafisches Symbol auf. Unter einem grafischen Symbol wird vorliegend im Allgemeinen ein Zeichen verstanden, d.h. eine Kennzeichnung der dem Bedienelement zugewiesenen Bedienfunktion. Ein Zeichen kann dabei ein Wortzeichen, ein einzelner Buchstabe, ein Bildzeichen und/oder ein Wort-Bild-Zeichen sein.

Beispielsweise kann die Bedienvorrichtung auch eine Mehrzahl von durch die Bedienperson betätigbaren Bedienelementen aufweisen, und der Symbolträger kann für jedes Bedienelement jeweils ein erstes und zumindest ein davon verschiedenes weiteres Symbol aufweisen. In der ersten Stellung des Symbolträgers werden die Bedienelemente mit dem jeweiligen ersten Symbol gekennzeichnet; in der weiteren Stellung werden die Bedienelemente mit dem jeweiligen weiteren Symbol gekennzeichnet. Beispielsweise können zwei oder drei oder vier oder fünf oder sechs Bedienelemente vorgesehen sein, denen jeweils mindestens zwei voneinander verschiedene grafische Symbole zugeordnet sind. Wird der Symbolträger von der ersten Stellung hin zur weiteren Stellung bewegt, so verändert sich vorzugsweise gleichzeitig die Kennzeichnung aller Bedienelemente von dem jeweiligen ersten Symbol auf das jeweilige weitere Symbol. Dies kann beispielsweise so aussehen, dass in der ersten Stellung des Symbolträgers ein erstes Funktionsgerät mittels der Bedienelemente gesteuert wird, während in der weiteren Stellung ein anderes Funktionsgerät gesteuert wird. So kann beispielsweise von einem Bordcomputer zu einem Radio bzw. einer Audioanlage oder aber zu einer Telefonanlage gewechselt werden. Mit lediglich wenigen Bedienelementen können somit verschiedenste Funktionsgeräte des Kraftfahrzeugs gesteuert werden.

In einer Ausführungsform ist vorgesehen, dass das zumindest eine Bedienelement in gegenseitiger Überlappung mit dem Symbolträger angeordnet ist und ein transparentes Fenster aufweist, durch welches das jeweils aktuelle Symbol einsehbar ist. Dies bedeutet insbesondere, dass der Symbolträger - bei einer Betrachtung durch den Benutzer - hinter dem zumindest einen Bedienelement versteckt bzw. verdeckt angeordnet ist und lediglich das aktuelle Symbol durch das Fenster hindurch eingesehen werden kann. Auf diese Art und Weise kann eine übersichtliche Bedienvorrichtung geschaffen werden, bei welcher das Bedienelement stets zuverlässig und gut wahrnehmbar bezeichnet ist. Außerdem wird somit ein besonders ansprechendes Erscheinungsbild der Bedienvorrichtung geschaffen, welches weiterhin auch dadurch verbessert werden kann, dass das genannte Fenster leicht - beispielsweise grau - eingefärbt werden kann, wodurch gewährleistet wird, dass das Symbol lediglich dann sichtbar angezeigt wird, wenn es zusätzlich noch beleuchtet, insbesondere hinterleuchtet, wird.

Bevorzugt sind die grafischen Symbole durch jeweilige Aussparungen in einer Bedruckung - beispielsweise mittels Siebdruck - des Symbolträgers gebildet. Dabei kann die Bedienvorrichtung eine Leuchteinrichtung aufweisen, mittels welcher die grafischen Symbole hinterleuchtet werden können. Auch somit kann ein optisch ansprechendes, elegantes Erscheinungsbild der Bedienvorrichtung ermöglicht werden. Außerdem kann somit auch gewährleistet werden, dass die Symbole ausschließlich dann sichtbar angezeigt werden, wenn sie mittels der Leuchteinrichtung hinterleuchtet werden. Der Symbolträger kann insgesamt eine transparente Platte bzw. Scheibe oder eine transparente Folie umfassen, welche auf der Rückseite negativ bedruckt ist, so dass die grafischen Symbole durch diese negative Bedruckung und somit durch die Aussparungen in der schwarzen Bedruckung gebildet sind. Die Scheibe oder Folie kann dabei transparent und optional auch leicht - beispielsweise grau - eingefärbt sein. Dadurch wird einerseits eine zuverlässige und wirkungsvolle Beleuchtung der Symbole ermöglicht; andererseits wird jedoch verhindert, dass die Leuchteinrichtung selbst durch das transparente Fenster eingesehen bzw. wahrgenommen werden kann.

Hinsichtlich der Bewegung des Symbolträgres zwischen der ersten Stellung und der zumindest einen weiteren Stellung können verschiedene Ausführungsformen vorgesehen sein:
Zum einen kann vorgesehen sein, dass der Symbolträger zwischen der ersten und der zumindest einen weiteren Stellung drehbar gelagert ist. Auf diese Weise kann eine besonders platzsparende Bedienvorrichtung geschaffen werden, bei welcher der Symbolträger besonders wenig Bauraum beansprucht. Dieser kann nämlich beispielsweise in Form einer kreisförmigen Scheibe bereitgestellt sein, welche um eine durch das Zentrum der Scheibe verlaufende Drehachse drehbar gelagert ist.

Alternativ kann jedoch auch vorgesehen sein, dass der Symbolträger zwischen der ersten und der zumindest einen weiteren Stellung verschiebbar, insbesondere translatorisch und somit geradlinig verschiebbar, gelagert ist. Diese Ausführungsform wiederum erweist sich beispielsweise dann als vorteilhaft, wenn für jedes Bedienelement eine große Anzahl von Symbolen vorgesehen ist, die bei einem drehbaren Symbolträger nicht realisiert werden können.

Es erweist sich als besonders vorteilhaft, wenn die Bedienvorrichtung ein durch die Bedienperson betätigbares und von den Bedienelementen separates Betätigungselement aufweist, mittels welchem der Symbolträger zwischen der ersten Stellung und der zumindest einen weiteren Stellung bewegt wird. Die Bedienperson kann somit selbst entscheiden, in welche Stellung der Symbolträger bewegt werden soll, so dass die Auswahl der Symbole und somit insbesondere auch die Auswahl der zugewiesenen Bedienfunktionen durch die Bedienperson selbst vorgenommen wird. Somit wird eine besonders benutzerfreundliche Bedienvorrichtung geschaffen.

Hinsichtlich der Übertragung der Bewegung des Betätigungselements auf den Symbolträger können verschiedene Ausführungsformen vorgesehen sein: Zum einen kann das Betätigungselement zunächst drehbar gelagert sein. Zum andern kann alternativ auch vorgesehen sein, dass das Betätigungselement verschiebbar, insbesondere geradlinig verschiebbar, gelagert ist. Eine rotatorische Bewegung des Betätigungselements kann entweder in eine ebenfalls rotatorische oder in eine translatorische Bewegung des Symbolträgers übertragen werden. Ebenfalls kann eine Schiebebewegung des Betätigungselements entweder eine rotatorische oder eine translatorische Bewegung des Symbolträgers zur Folge haben. Die Kraftübertragung von dem Betätigungselement auf den Symbolträger kann des Weiteren unmittelbar - d.h. ohne Zwischenelemente - oder aber über ein entsprechendes Getriebe durchgeführt werden.

Ist das Betätigungselement drehbar gelagert, so kann die Drehachse unterschiedlich orientiert sein. Zum einen kann vorgesehen sein, dass das Betätigungselement um eine Drehachse drehbar gelagert ist, die senkrecht zu einer Bedienoberfläche der Bedienvorrichtung orientiert ist. Zum anderen kann das Betätigungselement alternativ um eine Drehachse drehbar gelagert sein, welche im Wesentlichen parallel zur Bedienoberfläche verläuft. Unter der Bedienoberfläche wird dabei eine dem Benutzer zugewandte äußere Fläche des zumindest einen Bedienelements verstanden.

Vorzugsweise umfasst die Bedienvorrichtung eine elektronische Steuereinrichtung, welche zum Erfassen der aktuellen Stellung des Symbolträgers ausgebildet ist. Diese Erfassung kann beispielsweise so durchgeführt werden, dass ein bewegliches elektrisches Kontaktelement, welches mit dem Symbolträger verbunden ist, über Leiterbahnen auf einer ortsfesten Leiterplatte gleitend geführt wird, welche mit der Steuereinrichtung elektrisch gekoppelt sind. Die Steuereinrichtung erfasst also die jeweils aktuelle Stellung des Symbolträgers durch entsprechende Auswertung der an den Leiterbahnen bereitgestellten Signale.

Die Steuereinrichtung kann dazu ausgelegt sein, dem zumindest einen Bedienelement eine Bedienfunktion abhängig von der aktuellen Stellung des Symbolträgers zuzuweisen. Die zum aktuellen Zeitpunkt ausführbare Bedienfunktion des Bedienelements hängt somit von der aktuellen Stellung des Symbolträgers und damit auch von der aktuellen Kennzeichnung des Bedienelements ab. Somit kann mit einem Bedienelement eine Vielzahl von verschiedenen Bedienfunktionen realisiert werden.

Des Weiteren kann vorgesehen sein, dass die Steuereinrichtung zumindest zwei voneinander verschiedene Funktionsgeräte des Kraftfahrzeugs unter Ausgabe entsprechender Steuersignale ansteuern kann und das anzusteuernde Funktionsgerät abhängig von der aktuellen Stellung des Symbolträgers ausgewählt bzw. festgelegt wird. In der ersten Stellung des Symbolträgers kann beispielsweise ein Bordcomputer mittels des zumindest einen Bedienelements gesteuert werden. In einer weiteren Stellung kann wiederum z.B. eine Audioanlage gesteuert werden. In einer noch weiteren Stellung des Symbolträgers und somit bei einer noch weiteren Kennzeichnung des zumindest einen Bedienelements kann beispielsweise eine Telefonanlage gesteuert werden. Weitere Stellungen können z.B. einem Geschwindigkeitsregelungssystem (Tempomat) und/oder einer Heizung und/oder einem Navigationssystem zugeordnet sein. Auf diese Art und Weise kann mit nur wenigen Bedienelementen eine Vielzahl von verschiedenen Funktionsgeräten des Kraftfahrzeugs bedient werden.

Zusätzlich zu den grafischen Symbolen, welche die aktuelle Bedienfunktion des zumindest einen Bedienelements kennzeichnen, kann der Symbolträger für jede Stellung auch jeweils ein grafisches Funktionssymbol aufweisen, welches zur Kennzeichnung des ausgewählten Funktionsgeräts dient. Somit wird die Bedienperson darüber informiert, welches Gerät aktuell mittels der Bedienvorrichtung gesteuert werden kann.

Es ist vorgesehen, dass das zumindest eine Bedienelement durch einen berührungssensitiven Schaltbereich eines Touchpads gebildet ist. Dabei kann beispielsweise ein kapazitiver Sensor genutzt werden, mittels welchem die Berührung des Bedienelements auf kapazitivem Wege erfasst werden kann. Das Touchpad kann insgesamt eine transparente Scheibe bzw. Platte oder eine transparente Folie aufweisen, welche auf der Rückseite - ähnlich wie der Symbolträger - mit einer schwarzen Bedruckung versehen ist, welche für jedes Bedienelement eine Aussparung aufweist, durch welche das genannte Fenster realisiert ist. Wie bereits ausgeführt, kann diese transparente Platte oder Folie leicht eingefärbt ausgebildet sein, so dass die Symbole ausschließlich dann wahrgenommen werden, wenn sie mittels der Leuchteinrichtung beleuchtet bzw. hinterleuchtet werden. Der kapazitive Sensor kann an der Rückseite der Platte/Folie um das Fenster herum angeordnet sein. Werden mehrere Bedienelemente eingesetzt, so können diese mit einer gemeinsamen bzw. einzigen Folie/Platte realisiert werden, welche auf ihrer Rückseite mit mehreren kapazitiven Sensoren versehen ist. Für jedes Bedienelement ist dann vorzugsweise auch jeweils ein zugeordnetes Fenster vorgesehen, durch welches das aktuelle Symbol einsehbar ist.

Die genannte Folie/Platte kann insbesondere als eine hinterspritzte Dekorfolie ausgebildet sein, beispielsweise mit einem Hochglanz-Tiefeneffekt, als eine Matt-Folie, eine gebürstete Alu-Folie oder dergleichen.

Die Erfindung betrifft außerdem ein Lenkrad für ein Kraftfahrzeug umfassend eine erfindungsgemäße Bedienvorrichtung.

Bei dem Lenkrad kann vorgesehen sein, dass das zumindest eine Bedienelement an einer Frontseite des Lenkrads, insbesondere an einer Lenkradspeiche, angeordnet ist.

Weist die Bedienvorrichtung - wie bereits ausgeführt - ein durch die Bedienperson betätigbares Betätigungselement auf, mittels welchem der Symbolträger zwischen der ersten Stellung und der zumindest einen weiteren Stellung bewegbar ist, so können zwei alternative Ausführungsformen vorgesehen sein:
Es ist vorgesehen, dass dieses Betätigungselement an einer der Frontseite gegenüberliegenden Rückseite des Lenkrads angeordnet ist. Bei dieser Ausführungsform erstreckt sich die gesamte Bedienvorrichtung durch das Lenkrad - insbesondere durch eine Speiche - hindurch, so dass das Betätigungselement mit dem Zeigefinger oder dem mittleren Finger betätigt werden kann. Das zumindest eine Bedienelement wird wiederum vorzugsweise mittels des Daumens betätigt. Alternativ dazu kann jedoch auch vorgesehen sein, dass das Betätigungselement zusammen mit dem zumindest einen Bedienelement an der Frontseite des Lenkrads angeordnet ist, insbesondere an der Lenkradspeiche. Hier erfolgt die Betätigung des Betätigungselements sowie des zumindest einen Bedienelements mit dem Daumen.

Ein erfindungsgemäßes Verfahren dient zum Betreiben einer Bedienvorrichtung eines Kraftfahrzeugs, bei welcher zumindest ein Bedienelement durch eine Bedienperson betätigt wird und das Bedienelement mittels eines Symbolträgers grafisch gekennzeichnet wird. Der Symbolträger trägt für das Bedienelement ein erstes und zumindest ein weiteres grafisches Symbol und wird zwischen einer ersten Stellung, in welcher das Bedienelement mit dem ersten Symbol gekennzeichnet wird, und zumindest einer weiteren Stellung bewegt, in welcher das Bedienelement mit dem weiteren Symbol gekennzeichnet wird.

Die mit Bezug auf die erfindungsgemäße Bedienvorrichtung vorgestellten bevorzugten Ausführungsformen sowie deren Vorteile gelten entsprechend für das erfindungsgemäße Lenkrad sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar. Der Schutzumfang wird durch die angefügten Ansprüche definiert.

Die Erfindung wird nun anhand einzelner bevorzugter Ausführungsbeispiele sowie unter Bezugnahme auf die beigefügten Zeichnungen näher erläutert.

Es zeigen:
- Fig. 1 und 2: in schematischer Darstellung eine Bedienvorrichtung gemäß einer Ausführungsform der Erfindung, wobei das allgemeine Prinzip der Bedienvorrichtung näher erläutert wird;
- Fig. 3: in schematischer Darstellung eine Schnittansicht durch eine Bedienvorrichtung gemäß einer Ausführungsform der Erfindung;
- Fig. 4: in schematischer Explosionsdarstellung die Bedienvorrichtung gemäß einer Ausführungsform der Erfindung;
- Fig. 5: in schematischer Darstellung eine Draufsicht auf die Bedienvorrichtung;
- Fig. 6: in schematischer Darstellung eine Draufsicht auf ein Touchpad mit Bedienelementen;
- Fig. 7 und 8: in schematischer Darstellung unterschiedliche Beispiele eines Symbolträgers;
- Fig. 9 und 10: in schematischer und perspektivischer Darstellung ein Lenkrad gemäß einer Ausführungsform der Erfindung;
- Fig. 11: in schematischer Darstellung eine Bedienvorrichtung gemäß einer weiteren Ausführungsform;
- Fig. 12: in schematischer Darstellung ein Lenkrad mit einer Bedienvorrichtung gemäß noch einer weiteren Ausführungsform;
- Fig. 13: in schematischer Explosionsdarstellung eine Bedienvorrichtung gemäß einer noch weiteren Ausführungsform;
- Fig. 14: in schematischer Darstellung eine Frontseite eines Lenkrads mit der Bedienvorrichtung gemäß Fig. 13; und
- Fig. 15: in schematischer Darstellung die Rückseite des Lenkrads gemäß Fig. 14.

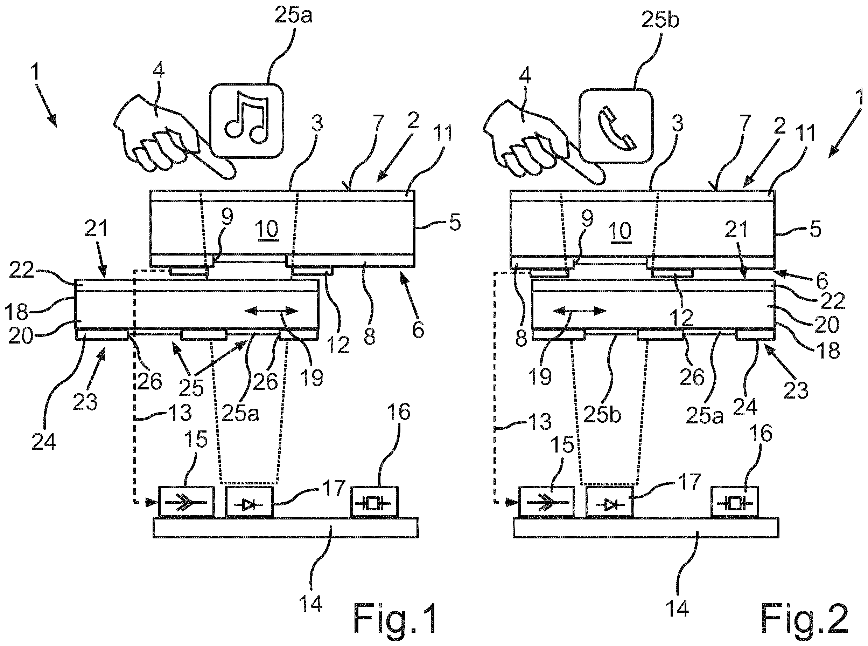

In Fig. 1 ist in schematischer Darstellung das Prinzip einer Bedienvorrichtung 1 gemäß einer Ausführungsform der Erfindung dargestellt. Die Bedienvorrichtung 1 ist zur Integration in ein Lenkrad eines Kraftfahrzeugs, insbesondere eines Personenkraftwagens, ausgebildet. Die Bedienvorrichtung 1 umfasst ein berührungssensitives Touchpad 2 mit zumindest einem Bedienelement 3, welches durch eine Bedienperson 4 betätigt werden kann. Im Ausführungsbeispiel ist das Bedienelement 3 als berührungssensitiver Bereich des Touchpads 2 ausgebildet. Das Touchpad 2 umfasst eine transparente Folie 5 mit einer Dicke von 0,2 mm bis 1 mm. Die transparente Folie 5 ist an ihrer Rückseite 6 und somit an einer von einer Bedienoberfläche 7 abgewandten Seite mit einer schwarzen Bedruckung 8 versehen, welche lichtundurchlässig ist. Die Bedruckung 8 kann beispielsweise in einem Siebdruckverfahren realisiert werden.

In der Bedruckung 8 ist für das Bedienelement 3 eine Aussparung 9 ausgebildet, durch welche ein transparentes und somit lichtdurchlässiges Fenster 10 gebildet ist.

Die Folie 5 ist des Weiteren mit einer Lackschicht 11 versehen, und zwar an ihrer Frontseite. Die äußere Fläche der Lackschicht 11 bildet die Bedienoberfläche 7.

An der Rückseite 6 des Touchpads 2 ist des Weiteren ein kapazitiver Sensor 12 um die Aussparung 9 herum angeordnet, mittels welchem das Berühren des Bedienelements 3 an seiner Bedienoberfläche 7 detektiert werden kann. Die Erfassung der Berührung erfolgt somit kapazitiv. Der Sensor 12 ist über eine elektrische Leitung 13 an eine Leiterplatte 14 über ein Verbindungselement 15 elektrisch angebunden. Auf der Leiterplatte 14 ist eine Steuereinrichtung 16 angeordnet, welche die Betätigung des Bedienelements 3 erfassen kann. Auf der Leiterplatte 14 ist des Weiteren eine Leuchteinrichtung 17 angeordnet, beispielsweise in Form einer oder mehrerer LEDs.

Sowohl das Touchpad 2 als auch die Leiterplatte 14 stellen ortsfeste Elemente dar. Relativ zum Touchpad 2 und somit zur Leiterplatte 14 ist ein Symbolträger 18 bewegbar angeordnet, welcher zwischen einer in Fig. 1 dargestellten ersten Stellung und einer in Fig. 2 dargestellten weiteren Stellung gemäß der Pfeildarstellung 19 bewegbar gelagert ist. Der Symbolträger 18 ist ebenfalls durch eine transparente Folie 20 mit einer Dicke von 0,2 mm bis 1 mm gebildet, welche an einer dem Touchpad 2 zugewandten Frontseite 21 mit einer Lackschicht 22 und an einer der Leiterplatte 14 zugewandten Rückseite 23 mit einer schwarzen Bedruckung 24 versehen ist. Der Symbolträger 18 weist im Ausführungsbeispiel gemäß Fig. 1 zwei grafische Symbole 25 auf, welche durch Aussparungen 26 in der schwarzen Bedruckung 24 gebildet sind.

Der Symbolträger 20 ist dabei in Sandwich-Bauweise zwischen dem Touchpad 2 einerseits und der Leiterplatte 14 andererseits und somit in gegenseitiger Überlappung mit und parallel zu dem Touchpad 2 angeordnet. In der in Fig. 1 dargestellten ersten Stellung befindet sich ein Symbol 25a direkt unterhalb des Fensters 10 des Bedienelements 3. In der in Fig. 2 gezeigten weiteren Stellung wiederum ist ein zweites Symbol 25b des Symbolträgers 20 unmittelbar unterhalb des Fensters 10 angeordnet. Während in der ersten Stellung somit das erste Symbol 25a durch das Fenster 10 einsehbar ist, kann in der weiteren Stellung das zweite Symbol 25b durch die Bedienperson 4 wahrgenommen werden. Die beiden Symbole 25a, 25b sind in den Figuren 1 und 2 über der Bedienvorrichtung 1 auch schematisch angedeutet.

Sowohl die Folie 5 als auch die Folie 20 können leicht eingefärbt ausgebildet sein, so dass sie beispielsweise eine graue Farbgebung aufweisen. Somit wird einerseits gewährleistet, dass bei einer ausgeschalteten Leuchteinrichtung 17 das Symbol 25 nicht sichtbar ist. Andererseits wird dadurch auch erreicht, dass bei einer eingeschalteten Leuchteinrichtung 17 ausschließlich das aktuelle Symbol 25, nicht jedoch die Leuchteinrichtung 17 selbst sichtbar ist.

Es ist auch vorgesehen, dass die aktuelle Stellung des Symbolträgers 18 durch die Steuereinrichtung 16 erfasst werden kann und abhängig von der aktuellen Stellung dem Bedienelement 3 eine Bedienfunktion zugewiesen wird. Der Symbolträger 18 kann dabei durch die Bedienperson 4 selbst bewegt werden.

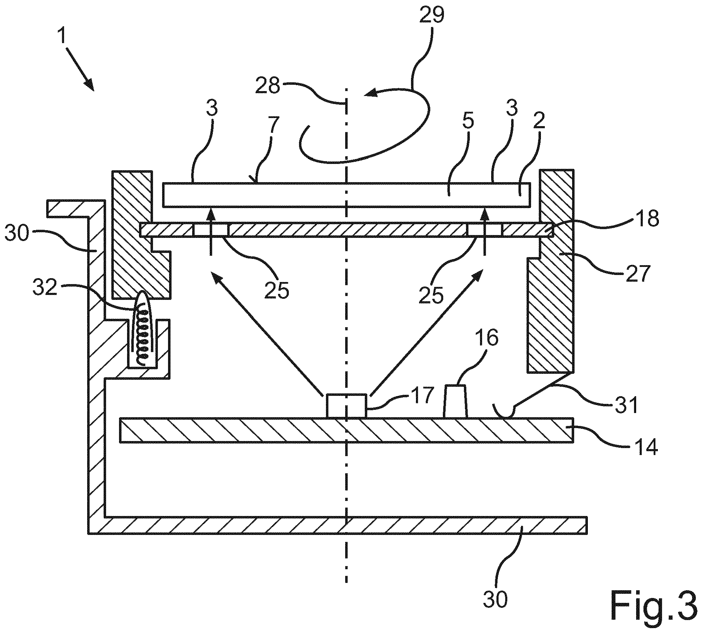

In Fig. 3 ist eine Schnittansicht durch eine Bedienvorrichtung 1 gemäß einer Ausführungsform dargestellt. Der Symbolträger 18 ist mit einem Betätigungselement 27 drehfest verbunden, welches ringförmig ausgebildet ist und das Touchpad 2 mit den Bedienelementen 3 vollumfänglich umgibt bzw. umschließt. Das Betätigungselement 27 ist zusammen mit dem Symbolträger 18 um eine senkrecht zur Bedienoberfläche 7 verlaufende Drehachse 28 gemäß der Pfeildarstellung 29 drehbar an einem ortsfesten Gehäuse 30 gelagert. Zur Erfassung der aktuellen Drehstellung des Betätigungselements 27 bzw. des Symbolträgers 18 ist ein elektrisches Kontaktelement 31 vorgesehen, welches mit dem Betätigungselement 27 und somit mittelbar mit dem Symbolträger 18 drehfest verbunden ist und über Leiterbahnen gleitet, die auf der Leiterplatte 14 bereitgestellt sind. Diese Leiterbahnen sind mit der Steuereinrichtung 16 elektrisch gekoppelt, welche die aktuelle Stellung des Betätigungselements 27 erfasst.

Mit Hilfe einer federnd ausgebildeten Rasteinrichtung 32 wird beim Betätigen des Betätigungselements 27 eine haptische Rückmeldung erzeugt, indem die Rasteinrichtung 32 in eine korrespondierende Raststruktur einrastet, die an dem Betätigungselement 27 ausgebildet ist.

Das ringförmige Betätigungselement 27 ist so ausgebildet, dass es in Richtung entlang der Drehachse 28 über die Bedienoberfläche 7 hinaus ein wenig übersteht, und zwar in Richtung nach außen hin. Somit kann die Bedienperson 4 das Betätigungselement 27 ohne viel Aufwand ertasten und betätigen.

Im Ausführungsbeispiel gemäß Fig. 3 ist das Touchpad 2 bzw. die Folie 5 in Form einer kreisförmigen Scheibe ausgebildet und weist mehrere Bedienelemente 3 auf, die in Umfangsrichtung verteilt angeordnet sind. Es sei erwähnt, dass die in Fig. 3 gezeigte Leuchteinrichtung 17 lediglich schematisch angedeutet ist und für jedes Bedienelement 3 auch eine separate LED vorgesehen sein kann, welche unterhalb bzw. in Überlappung mit dem zugeordneten Bedienelement 3 angeordnet ist.

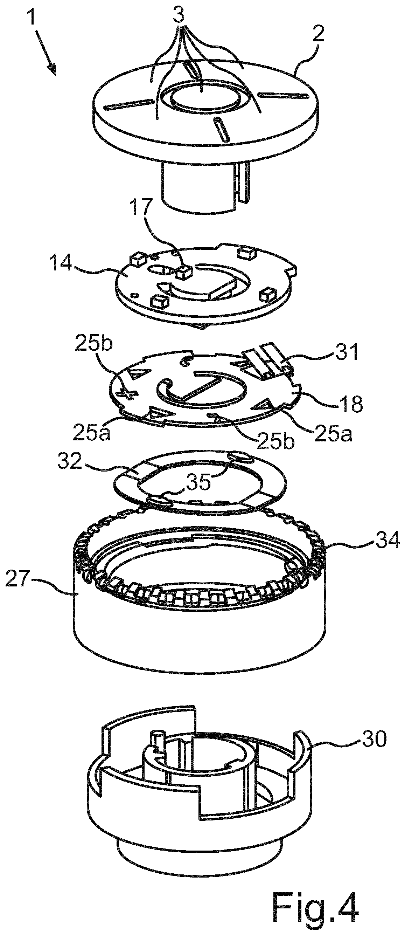

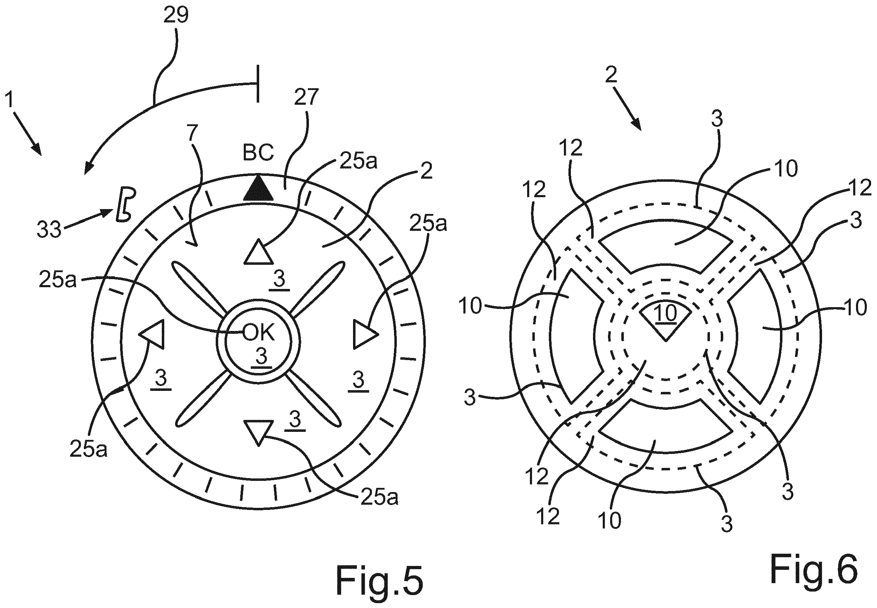

In Fig. 4 ist eine Explosionsdarstellung der Bedienvorrichtung 1 gemäß einer Ausführungsform dargestellt. Das Touchpad 2 ist kreisförmig ausgebildet und weist insgesamt fünf Bedienelemente 3 auf, nämlich ein Bedienelement 3, welches im Zentrum des kreisförmigen Touchpads 2 angeordnet ist, wie auch vier weitere Bedienelemente 3, die um das zentrale Bedienelement 3 herum in Umfangsrichtung verteilt angeordnet sind. Jedem Bedienelement 3 ist eine separate LED der Leuchteinrichtung 17 zugeordnet, welche auf der Leiterplatte 14 angeordnet ist. Im Ausführungsbeispiel gemäß Fig. 4 weist der Symbolträger 18 zwei verschiedene Gruppen von Symbolen 25a und 25b auf, so dass jedem Bedienelement 3 jeweils zwei verschiedene Symbole 25a, 25b zugeordnet sind. Befindet sich der Symbolträger 18 in der ersten Stellung, so sind die Bedienelemente 3 mit dem jeweils zugeordneten Symbol 25a der ersten Gruppe gekennzeichnet, wie dies schematisch anhand einer Draufsicht auf die Bedienvorrichtung 1 in Fig. 5 näher dargestellt ist. Die erste Stellung des Symbolträgers 18 ist dabei einem Bordcomputer als Funktionsgerät des Kraftfahrzeugs zugeordnet, so dass in dieser Stellung der Bordcomputer mittels der Bedienelemente 3 gesteuert werden kann. Wie in Fig. 5 weiterhin gezeigt, wird dies mit Hilfe eines Funktionssymbols BC signalisiert.

Wird das Betätigungselement 27 in Pfeilrichtung 29 in die weitere Stellung bewegt, so ändert sich die Kennzeichnung der Bedienelemente 3 auf die zweite Gruppe von Symbolen 25b. In dieser weiteren Stellung kann beispielsweise eine Telefonanlage gesteuert werden, was mit einem weiteren Funktionssymbol 33 angedeutet ist.

Mit erneutem Bezug auf Fig. 4 kann das Betätigungselement 27 eine umlaufende Zahnstruktur 34 aufweisen, durch welche eine Betätigung des Betätigungselements 27 erleichtert wird. Die Rasteinrichtung 32 ist außerdem in Form einer Ringfeder mit Noppen 35 ausgebildet, welche in die genannte Raststruktur in dem Betätigungselement 27 einrasten können.

Eine Draufsicht auf das Touchpad 2 ist in Fig. 6 näher dargestellt. Jedes Bedienelement 3 weist ein transparentes Fenster 10 auf, durch welches das jeweils aktuelle und zugeordnete Symbol 25 eingesehen werden kann. Um das jeweilige Fenster 10 ist ein kapazitiver Sensor 12 angeordnet, welcher durch entsprechende Metallisierung an der Rückseite 6 (siehe Fig. 1) des Touchpads 2 gebildet ist. Wie bereits ausgeführt, sind die Fenster 10 durch eine Aussparung 9 (Fig. 1) in der schwarzen Bedruckung 6 gebildet.

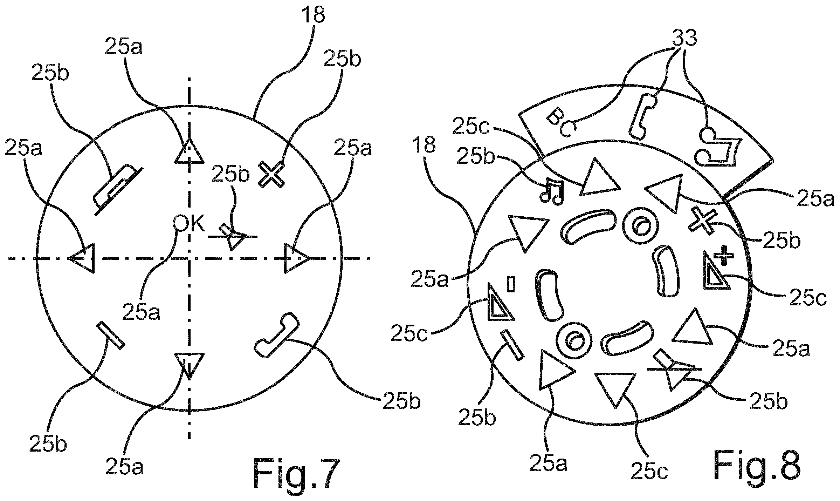

In Fig. 7 ist eine Draufsicht auf den Symbolträger 18 gemäß einem Ausführungsbeispiel gezeigt. Wie bereits ausgeführt, kann der Symbolträger 18 eine erste Gruppe von Symbolen 25a sowie eine zweite Gruppe von Symbolen 25b aufweisen. Die erste Gruppe 25a wird in der ersten Stellung angezeigt, während die zweite Gruppe 25b in der weiteren Stellung angezeigt wird. In der ersten Stellung wird z.B. der Bordcomputer gesteuert; in der weiteren Stellung kann z.B. die Telefonanlage gesteuert werden.

Ein weiteres Beispiel des Symbolträgers 18 ist in Fig. 8 dargestellt. Hier sind drei verschiedene Winkelstellungen möglich, in denen unterschiedliche Funktionsgeräte gesteuert werden können, nämlich neben dem Bordcomputer und der Telefonanlage zusätzlich beispielsweise eine Audioanlage. Zur Kennzeichnung dieser Funktionsgeräte sind Funktionssymbole 33 vorgesehen. Im Ausführungsbeispiel gemäß Fig. 8 sind insgesamt drei Gruppen von Symbolen 25a, 25b, 25c bereitgestellt, wobei die dritte Gruppe 25c in einer dritten Stellung des Symbolträgers 18 angezeigt werden, in welcher die Audioanlage gesteuert wird. Die Symbole 25 sind lediglich beispielhaft gezeigt.

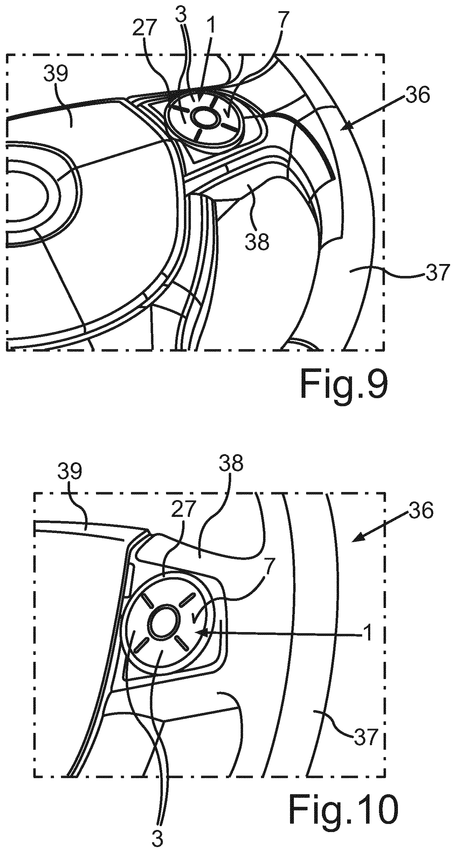

In den Fig. 9 und 10 ist in schematischer und perspektivischer Darstellung ein Lenkrad 36 gemäß einer Ausführungsform der Erfindung dargestellt. Das Lenkrad 36 weist in bekannter Weise einen Lenkradkranz 37 sowie eine Lenkradspeiche 38 auf, welche den Lenkradkranz 37 mit einer Lenkradnabe 39 verbindet. In die Lenkradspeiche 38 ist die Bedienvorrichtung 1 integriert, so dass die Bedienoberfläche 7 dem Fahrer zugewandt ist. Die Bedienperson 4 kann somit mit einem einzigen Daumen sowohl das Betätigungselement 27 als auch die Bedienelemente 3 betätigen und somit eine Vielzahl von Funktionsgeräten des Kraftfahrzeugs steuern.

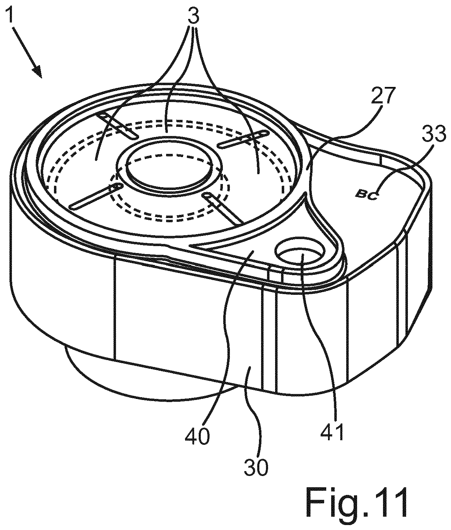

In Fig. 11 ist die Bedienvorrichtung 1 gemäß einer weiteren Ausführungsform der Erfindung gezeigt. Hier weist das Betätigungselement 27 zusätzlich einen in radialer Richtung nach außen abstehenden und in Form einer radialen Lasche ausgebildeten Fortsatz 40 auf, über welchen die Bedienperson 4 das Betätigungselement 27 betätigen kann. Der Fortsatz 40 hat eine muldenartige Aussparung 41, an welcher das Betätigungselement 27 durch die Bedienperson 4 ertastet werden kann und welche somit die Betätigung des Betätigungselements 27 vereinfacht.

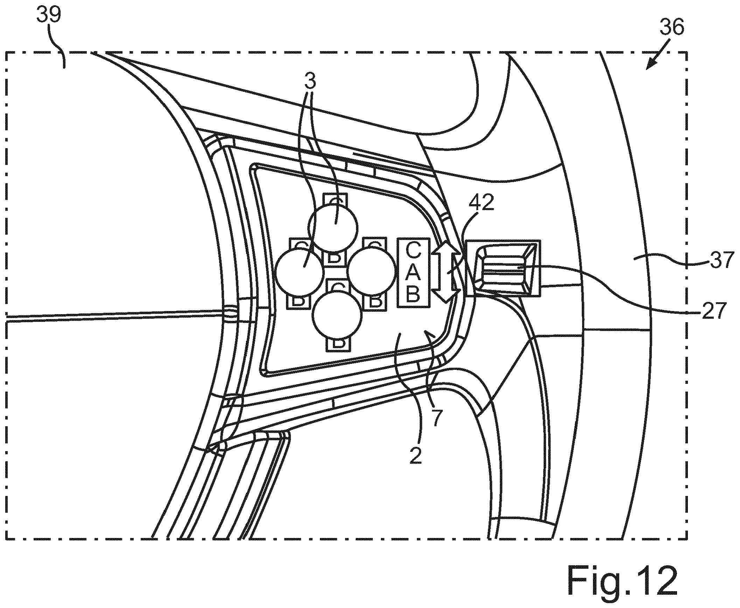

Fig. 12 zeigt das Lenkrad 36 mit einer Bedienvorrichtung 1 gemäß einer weiteren Ausführungsform der Erfindung. Der Unterschied besteht hier darin, dass der Symbolträger 18 nicht drehbar, sondern translatorisch verschiebbar gelagert ist, nämlich gemäß der Pfeildarstellung 42. Um den Symbolträger 18 zu verschieben, kann ein Betätigungselement 27 in Form eines Schieberschalters bereitgestellt werden. Zur Veranschaulichung sind die verschiedenen Symbole 25 in Fig. 12 mit A, B und C gekennzeichnet.

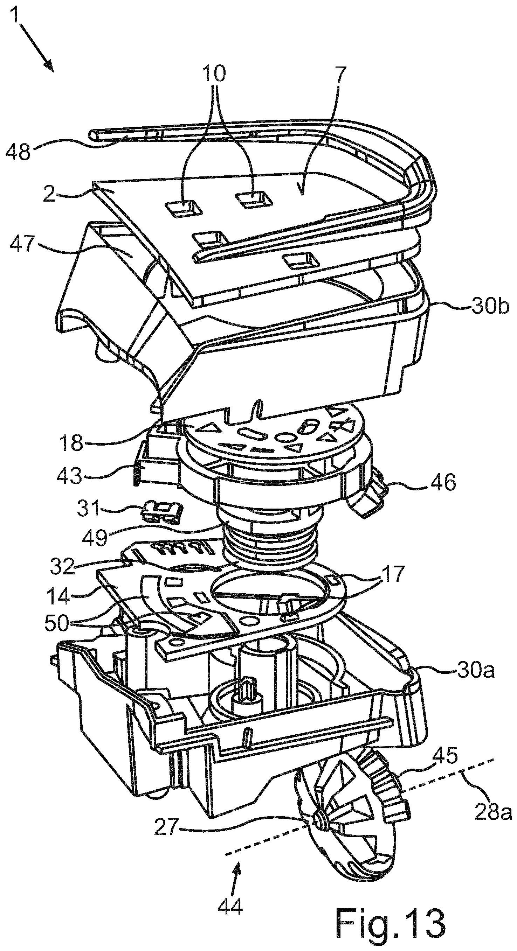

Eine weitere Bedienvorrichtung 1, bei welcher insbesondere der Symbolträger 18 gemäß Fig. 8 eingesetzt werden kann, ist in Fig. 13 gezeigt. Das Gehäuse besteht hier aus zwei Gehäuseteilen 30a, 30b. Der Symbolträger 18 liegt an einem Halter 43 an, welcher den Symbolträger 18 trägt und zusätzlich als ein Getriebeelement fungiert. Das Betätigungselemente 27 ist in diesem Ausführungsbeispiel an einer der Bedienoberfläche 7 gegenüberliegenden Rückseite 44 des Gehäuses 30 drehbar gelagert, und zwar um eine im Wesentlichen parallel zur Bedienoberfläche 7 verlaufende Drehachse 28a. Das Betätigungselement 27 ist hier kreisförmig ausgeführt und weist an seinem Außenumfang eine Zahnstruktur 45 auf, welche in eine korrespondierende Zahnstruktur 46 des Halters 43 eingreift und mit dieser derart zusammenwirkt, dass beim Drehen des Betätigungselements 27 um die Drehachse 28a der Symbolträger 18 um eine im Wesentlichen senkrecht dazu verlaufende Drehachse gedreht wird. Die Übertragung der Bewegung von dem Betätigungselement 27 an den Symbolträger 18 erfolgt somit unter Vermittlung des Halters 43 und somit über ein Getriebe.

Das Touchpad 2 ist im Ausführungsbeispiel gemäß Fig. 13 auch scheibenförmig ausgebildet und weist eine längliche Form auf. Das Touchpad 2 wird in eine Aufnahme bzw. Vertiefung 47 des Gehäuseteils 30b aufgenommen und mittels eines Rahmens 48 befestigt.

Die Rasteinrichtung 32 ist hier in Form einer Spiralfeder ausgebildet, welche an einem Rastelement 49 um dieses herum angeordnet ist. Auf der Leiterplatte 14 sind nun Leiterbahnen 50 erkennbar, über welche das Kontaktelement 31 beim Drehen des Betätigungselements 27 gleitet.

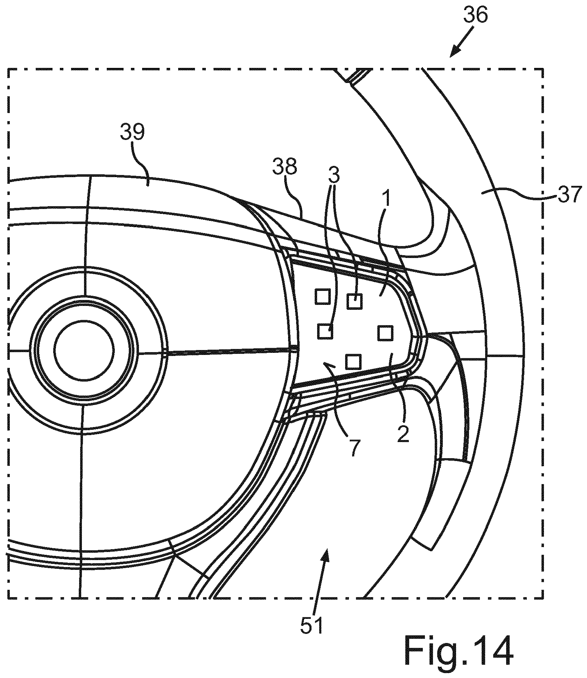

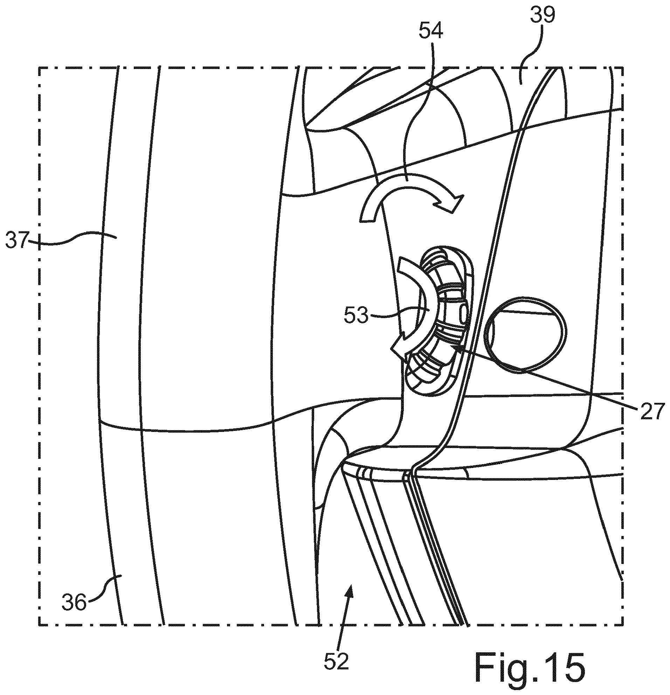

Ein Lenkrad 36 gemäß einer weiteren Ausführungsform ist in den Fig. 14 und 15 dargestellt. Dieses Lenkrad 36 weist die Bedienvorrichtung 1 gemäß Fig. 13 auf. Während in Fig. 14 eine Frontseite 51 und somit eine dem Fahrer zugewandte Seite des Lenkrads 36 gezeigt ist, ist in Fig. 15 eine vom Fahrer abgewandte Rückseite 52 des Lenkrads 36 gezeigt. Die Bedienvorrichtung 1 ist nach wie vor in eine Lenkradspeiche 38 integriert. Die Bedienvorrichtung 1 ist so angeordnet, dass das Touchpad 2 an der Frontseite 51 des Lenkrads 36 angeordnet ist, während das Betätigungselement 27 von der Rückseite 52 her zugänglich ist. Wie in Fig. 15 angedeutet ist, führt eine Drehung des Betätigungselements 27 um seine Drehachse 28a (Fig. 13) gemäß der Pfeildarstellung 53 zu einer Drehung des Symbolträgers 18 um eine senkrecht dazu verlaufende Drehachse gemäß der Pfeildarstellung 54. Der Fahrer kann das Betätigungselement 27 mit dem Zeigefinger oder mit dem mittleren Finger betätigen. Die Bedienelemente 3 an der Frontseite 51 werden nach wie vor vorzugsweise mit dem Daumen bedient.

## Patentansprüche

1. Bedienvorrichtung (1) für ein Kraftfahrzeug, mit zumindest einem durch eine Bedienperson (4) betätigbaren Bedienelement (3), und mit einem von dem Bedienelement (3) separaten Symbolträger (18) zur graphischen Kennzeichnung des zumindest einen Bedienelements (3),
**dadurch gekennzeichnet, dass**
der Symbolträger (18) für das Bedienelement (3) ein erstes und zumindest ein davon verschiedenes weiteres graphisches Symbol (25) aufweist und zwischen einer ersten Stellung, in welcher das Bedienelement (3) mit dem ersten Symbol (25a) gekennzeichnet ist, und zumindest einer weiteren Stellung relativ zu dem zumindest einen Bedienelement (3) bewegbar ist, in welcher das Bedienelement (3) mit dem weiteren Symbol (25b) gekennzeichnet ist, wobei das zumindest eine Bedienelement (3) durch einen berührungssensitiven Schaltbereich eines Touchpads (2) gebildet ist, und wobei das zumindest eine Bedienelement (3) an einer Frontseite (51) eines Lenkrads (36), insbesondere einer Lenkradspeiche (38), angeordnet ist und die Bedienvorrichtung (1) ein durch die Bedienperson (4) betätigbares Betätigungselement (27) aufweist, mittels welchem der Symbolträger (18) zwischen der ersten Stellung und der zumindest einen weiteren Stellung bewegbar ist und welches an der Frontseite (51) oder einer der Frontseite gegenüberliegenden Rückseite (52) des Lenkrads (36) angeordnet ist.

2. Bedienvorrichtung (1) nach Anspruch 1,
**dadurch gekennzeichnet, dass**
die Bedienvorrichtung (1) eine Mehrzahl von durch die Bedienperson (4) betätigbaren Bedienelementen (3) aufweist und der Symbolträger (18) für jedes Bedienelement (3) jeweils ein erstes und zumindest ein davon verschiedenes weiteres Symbol (25) aufweist, wobei in der ersten Stellung des Symbolträgers (18) die Bedienelemente (3) mit dem jeweiligen ersten Symbol (25a) gekennzeichnet sind und in der weiteren Stellung die Bedienelemente (3) mit dem jeweiligen weiteren Symbol (25b) gekennzeichnet sind.

3. Bedienvorrichtung (1) nach Anspruch 1 oder 2,
**dadurch gekennzeichnet, dass**
das zumindest eine Bedienelement (3) in gegenseitiger Überlappung mit dem Symbolträger (18) angeordnet ist und ein transparentes Fenster (10) aufweist, durch welches das jeweils aktuelle Symbol (25) einsehbar ist.

4. Bedienvorrichtung (1) nach einem der vorhergehenden Ansprüche,
**dadurch gekennzeichnet, dass**
die graphischen Symbole (25) durch jeweilige Aussparungen (26) in einer Bedruckung (24) des Symbolträgers (18) gebildet sind und die Bedienvorrichtung (1) eine Leuchteinrichtung (17) zum Hinterleuchten der Symbole (25) umfasst.

5. Bedienvorrichtung (1) nach einem der vorhergehenden Ansprüche,
**dadurch gekennzeichnet, dass**
der Symbolträger (18) zwischen der ersten Stellung und der zumindest einen weiteren Stellung drehbar gelagert ist.

6. Bedienvorrichtung (1) nach einem der Ansprüche 1 bis 4,
**dadurch gekennzeichnet, dass**
der Symbolträger (18) zwischen der ersten Stellung und der zumindest einen weiteren Stellung verschiebbar, insbesondere geradlinig verschiebbar, gelagert ist.

7. Bedienvorrichtung (1) nach einem der vorhergehenden Ansprüche,
**dadurch gekennzeichnet, dass**
die Bedienvorrichtung (1) ein durch die Bedienperson (4) betätigbares Betätigungselement (27) aufweist, mittels welchem der Symbolträger (18) zwischen der ersten Stellung und der zumindest einen weiteren Stellung bewegbar ist.

8. Bedienvorrichtung (1) nach einem der vorhergehenden Ansprüche,
**dadurch gekennzeichnet, dass**
die Bedienvorrichtung (1) eine Steuereinrichtung (16) zum Erfassen der aktuellen Stellung des Symbolträgers (18) aufweist, wobei die Steuereinrichtung (16) dazu ausgelegt ist, dem zumindest einen Bedienelement (3) eine Bedienfunktion abhängig von der aktuellen Stellung des Symbolträgers (18) zuzuweisen.

9. Bedienvorrichtung (1) nach Anspruch 8,
**dadurch gekennzeichnet, dass**
die Steuereinrichtung (16) dazu ausgelegt ist, zumindest zwei voneinander verschiedene Funktionsgeräte des Kraftfahrzeugs unter Ausgabe entsprechender Steuersignale anzusteuern und das anzusteuernde Funktionsgerät abhängig von der aktuellen Stellung des Symbolträgers (18) auszuwählen.

10. Bedienvorrichtung (1) nach Anspruch 9,
**dadurch gekennzeichnet, dass**
der Symbolträger (18) zusätzlich für jede Stellung jeweils ein graphisches Funktionssymbol (BC, 33) zur Kennzeichnung des ausgewählten Funktionsgeräts aufweist.

11. Bedienvorrichtung (1) nach einem der vorhergehenden Ansprüche,
**dadurch gekennzeichnet, dass**
die Bedienvorrichtung (1) zur Installation in und/oder an einem Lenkrad (36) des Kraftfahrzeugs ausgebildet ist.

12. Lenkrad (36) für ein Kraftfahrzeug, mit einer Bedienvorrichtung (1) nach einem der vorhergehenden Ansprüche.

## Claims

1. Operating device (1) for a motor vehicle, with at least one operating control (3) which can be actuated by an operator (4), and with a symbol bearer (18), separate from the operating control (3), for the graphic identification of the at least one operating control (3),
**characterized in that**
the symbol bearer (18) for the operating control (3) has a first and at least one further graphical symbol (25) different therefrom and can be moved relative to the at least one operating control (3) between a first position in which the operating control (3) is identified with the first symbol (25a) and at least one further position in which the operating control (3) is identified with the further symbol (25b), wherein the at least one operating control (3) is formed by a touch-sensitive switching area of a touchpad (2), and wherein the at least one operating control (3) is arranged at a front side (51) of a steering wheel (36), particularly a steering wheel spoke (38), and the operating device (1) has an actuating element (27) which can be actuated by the operator (4), by means of which the symbol bearer (18) can be moved between the first position and the at least one further position and which is arranged on the front side (51) or at a rear side (52), opposite the front side, of the steering wheel (36).

2. Operating device (1) according to Claim 1, **characterized in that**
the operating device (1) has a multiplicity of operating controls (3), which can be actuated by the operator (4), and the symbol bearer (18) has in each case a first and at least one further symbol (25) different therefrom for each operating control (3), wherein the operating controls (3) are identified with the respective first symbol (25a) in the first position of the symbol bearer (18) and the operating controls (3) are identified with the respective further symbol (25b) in the further position.

3. Operating device (1) according to Claim 1 or 2, **characterized in that**
the at least one operating element (3) is arranged in mutual overlap with the symbol bearer (18) and has a transparent window (10) through which the respective current symbol (25) can be viewed.

4. Operating device (1) according to one of the preceding claims,
**characterized in that**
the graphical symbols (25) are formed by respective recesses (26) in printing (24) on the symbol bearer (18) and the operating device (1) comprises a luminous facility (17) for backlighting the symbols (25).

5. Operating device (1) according to one of the preceding claims,
**characterized in that**
the symbol bearer (18) is rotatably mounted between the first position and the at least one further position.

6. Operating device (1) according to one of Claims 1 to 4,
**characterized in that**
the symbol bearer (18) is mounted displaceably between the first position and the at least one further position, particularly displaceably in a straight line.

7. Operating device (1) according to one of the preceding claims,
**characterized in that**
the operating device (1) has an actuating element (27) which can be actuated by the operator (4), by means of which the symbol bearer (18) can be moved between the first position and the at least one further position.

8. Operating device (1) according to one of the preceding claims,
**characterized in that**
the operating device (1) has a control facility (16) for detecting the current position of the symbol bearer (18), wherein the control facility (16) is designed to assign to the at least one operating control (3) an operating function in dependence on the current position of the symbol bearer (18).

9. Operating device (1) according to Claim 8, **characterized in that**
the control facility (16) is designed to drive at least two mutually different functional devices of the motor vehicle by outputting corresponding control signals and to select the functional device to be driven in dependence on the current position of the symbol bearer (18).

10. Operating device (1) according to Claim 9, **characterized in that**
the symbol bearer (18) additionally has for each position in each case a graphical function symbol (BC, 33) for identifying the selected functional device.

11. Operating device (1) according to one of the preceding claims,
**characterized in that**
the operating device (1) is designed for installation in and/or on a steering wheel (36) of the motor vehicle.

12. Steering wheel (36) for a motor vehicle, with an operating device (1) according to one of the preceding claims.

## Revendications

1. Dispositif de commande (1) pour un véhicule automobile, avec au moins un élément de commande (3) pouvant être actionné par une personne de commande (4), et avec un porte-symboles (18) séparé de l'élément de commande (3) pour la représentation graphique dudit au moins un élément de commande (3),
**caractérisé en ce que** le porte-symboles (18) présente pour l'élément de commande (3) un premier et au moins un autre symbole graphique (25) différent de celui-ci et est déplaçable par rapport audit au moins un élément de commande (3) entre une première position, dans laquelle l'élément de commande (3) est représenté par le premier symbole (25a), et au moins une autre position, dans laquelle l'élément de commande (3) est représenté par l'autre symbole (25b), dans lequel ledit au moins un élément de commande (3) est formé par un champ de commutation sensible au contact d'un pavé tactile (2), et dans lequel ledit au moins un élément de commande (3) est disposé sur un côté avant (51) d'un volant de direction (36), en particulier d'un rayon du volant de direction (38), et le dispositif de commande (1) présente un élément d'actionnement (27) pouvant être actionné par la personne de commande (4), au moyen duquel le porte-symboles (18) est déplaçable entre la première position et ladite au moins une autre position, et qui est disposé sur le côté avant (51) ou sur un côté arrière (52) opposé au côté avant du volant de direction (36).

2. Dispositif de commande (1) selon la revendication 1, **caractérisé en ce que** le dispositif de commande (1) présente une multiplicité d'éléments de commande (3) pouvant être actionnés par la personne de commande (4) et le porte-symboles (18) présente pour chaque élément de commande (3) respectivement un premier et au moins un autre symbole (25) différent de celui-ci, dans lequel dans la première position du porte-symboles (18) les éléments de commande (3) sont représentés avec le premier symbole respectif (25a) et dans la deuxième position ils sont représentés par l'autre symbole respectif (25b).

3. Dispositif de commande (1) selon une revendication 1 ou 2, **caractérisé en ce que** ledit au moins un élément de commande (3) est disposé en chevauchement mutuel avec le porte-symboles (18) et présente une fenêtre transparente (10), à travers laquelle le symbole actuel (25) peut être respectivement observé.

4. Dispositif de commande (1) selon l'une quelconque des revendications précédentes, **caractérisé en ce que** les symboles graphiques (25) sont formés par des découpes respectives (26) dans une impression (24) du porte-symboles (18) et le dispositif de commande (1) comprend un dispositif d'éclairage (17) pour l'éclairage arrière des symboles (25).

5. Dispositif de commande (1) selon l'une quelconque des revendications précédentes, **caractérisé en ce que** le porte-symboles (18) est monté de façon rotative entre la première position et ladite au moins une autre position.

6. Dispositif de commande (1) selon l'une quelconque des revendications 1 à 4, **caractérisé en ce que** le porte-symboles (18) est monté de façon coulissante, en particulier de façon coulissante linéairement, entre la première position et ladite au moins une autre position.

7. Dispositif de commande (1) selon l'une quelconque des revendications précédentes, **caractérisé en ce que** le dispositif de commande (1) présente un élément d'actionnement (27) pouvant être actionné par la personne de commande (4), au moyen duquel le porte-symboles (18) est déplaçable entre la première position et ladite au moins une autre position.

8. Dispositif de commande (1) selon l'une quelconque des revendications précédentes, **caractérisé en ce que** le dispositif de commande (1) comporte un système de commande (16) pour détecter la position actuelle du porte-symbole (18), dans lequel le système de commande (16) est conçu pour attribuer audit au moins un élément de commande (3) une fonction de commande en fonction de la position actuelle du porte-symboles (18).

9. Dispositif de commande (1) selon la revendication 8, **caractérisé en ce que** le système de commande (16) est conçu pour activer au moins deux appareils fonctionnels du véhicule automobile différents l'un de l'autre par émission de signaux de commande correspondants et pour sélectionner l'appareil fonctionnel à activer en fonction de la position actuelle du porte-symboles (18).

10. Dispositif de commande (1) selon la revendication 9, **caractérisé en ce que** le porte-symboles (18) présente en outre pour chaque position respectivement un symbole fonctionnel graphique (BC, 33) pour la représentation de l'appareil fonctionnel sélectionné.

11. Dispositif de commande (1) selon l'une quelconque des revendications précédentes, **caractérisé en ce que** le dispositif de commande (1) est configuré en vue de son installation dans et/ou sur un volant de direction (36) du véhicule automobile.

12. Volant de direction (36) pour un véhicule automobile, comportant un dispositif de commande (1) selon l'une quelconque des revendications précédentes.
